# EUROPÄISCHE PATENTSCHRIFT

(11) **EP 1 499 930 B1**
(45) Veröffentlichungstag und Bekanntmachung des Hinweises auf die Patenterteilung: **09.03.2011**
(21) Anmeldenummer: 03717266.5
(22) Anmeldetag: 02.04.2003
(51) Int. Cl.: G05B 13/02, G05B 15/02

(54) **VERFAHREN UND COMPUTER ZUR PLANUNG VON VERSUCHEN**
METHOD AND COMPUTER FOR EXPERIMENTAL DESIGN
PROCEDE ET SYSTEME INFORMATIQUE POUR PLANIFIER DES ESSAIS

(30) Priorität: 15.04.2002 DE 10216558
(43) Veröffentlichungstag der Anmeldung: 26.01.2005
(73) Patentinhaber: Bayer Technology Services GmbH, 51368 Leverkusen (DE)
(72) Erfinder: SCHUPPERT, Andreas, 51515 Kürten (DE); OHRENBERG, Arne, 51467 Bergisch Gladbach (DE)
(86) Internationale Anmeldenummer: PCT/EP2003/003424
(87) Internationale Veröffentlichungsnummer: WO 2003/087957

(56) Entgegenhaltungen:
- WO-A-00/51045
- US-A- 5 253 331
- US-A- 5 621 665

## Beschreibung

Die Erfindung betrifft ein Verfahren und ein Computersystem zur Planung von Versuchen sowie ein entsprechendes Computerprogrammprodukt.

Aus dem Stand der Technik ist es bekannt, Versuche mittels statistischer Versuchsplanungsverfahren zu planen. Solche Planungsverfahren werden unter anderem dazu benutzt, mit einer minimalen Anzahl von Versuchen ein empirisches Prozessmodell für den Zusammenhang zwischen den Regel- und Störgrößen in einem Prozess und den resultierenden Produkt- und Prozesseigenschaften zu ermitteln. Eine solche statistische Versuchsplanung lässt sich beispielsweise mit Hilfe des Computerprogramms "STAVEX" (STAtistische Versuchsplanung mit EXpertensystem, Hersteller AICOS Technologie, Schweiz) durchführen. Ein weiteres kommerziell erhältliches Computerprogramm für die Versuchsplanung ist das Programm "Statistica®", der Fa. StatSoft (Europe) GmbH, Deutschland.

Im Bereich der statistischen Versuchsplanung werden im Stand der Technik verschiedene Versuchsplanungstypen unterschieden. Insbesondere unterscheidet man zwischen der klassischen, vollfaktoriellen Methode und modernen Verfahren nach Taguchi oder Shainin.

Die klassische, vollfaktorielle Methode ist der Ursprung aller statistischen Versuchsplanungsmethoden. Sie basiert auf einem Vergleich aller qualitätsbedingenden Faktoren miteinander in Anlehnung an die Varianzanalyse. Zahlreiche Varianten wurden im Laufe der vergangenen Jahrzehnte erarbeitet und in Forschungs- und Entwicklungslabors validiert.

Das Shainin-DOE (DOE = Design of Experiment) gilt als geeignetes Verfahren für die Prozessoptimierung, weil es sogenannte "starke" Einflussgrößen isoliert und diese auf Relevanz und Abhängigkeit untersucht.

Das Taguchi-DOE basiert auf vorangegangenen, teilfaktoriellen, orthogonalen Versuchsplänen. Wegen der drastischen Versuchslaufeinsparungen durch Vorauswahl der wichtigsten Einflussgrößen handelt es sich hierbei um ein schnelles und relativ wirtschaftliches Verfahren der Versuchs- und Prozessplanung.

Weitere bekannte statistische Versuchsplanungstypen sind teilfaktorielle Versuchspläne ("fractional factorial"), Plackett-Burmann Versuchspläne, Zentral-zusammengesetzte Pläne ("central composite"), Box-Behnken Versuchspläne, D-optimale Pläne ("D-optimal Designs"), Mischungspläne, Balancierte Blockpläne, Lateinische Quadrate, Desperado Pläne (vgl. hierzu auch Eberhard Scheffler, Statistische Versuchsplanung and -auswertung; Deutscher Verlag für Grundstoffindustrie, Stuttgart, 1997).

Weitere Versuchsplanungsverfahren sind bekannt aus Hans Bendemer, "Optimale Versuchsplanung", Reihe Deutsche Taschenbücher (DTB, Band 23, und ISBN 3-87144-278-X) sowie Wilhelm Kleppmann, Taschenbuch Versuchsplanung, "Produkte und Prozesse optimieren" 2., erweitere Auflage, ISBN: 3-446-21615-4. Diese Verfahren werden in der Praxis aus Kostengründen oftmals eingesetzt.

Nachteilig bei bekannten statistischen Versuchsplanungsverfahren ist, dass die Versuchsplanung und Modellierung ohne Berücksichtigung von zusätzlichem Wissen erfolgt, so dass u.U. keine geeigneten Optima gefunden werden und die Vertrauenswürdigkeit der generierten Ergebnisse und Aussagen fragwürdig ist. Ein weiterer gewichtiger Nachteil von vorbekannten Versuchsplanungsverfahren ist, dass diese bei einer großen Zahl zu berücksichtigender Einflussgrößen zu umfangreich werden. Ferner ist bei bestimmten Systemen z.B. in der Katalyse oder Wirkstoffforschung oftmals die Zielfunktion stark "zerklüftet" und deshalb schwer mit statistischen Verfahren fassbar.

Aus der WO 00 / 15341 ist ein Verfahren zur Entwicklung von Feststofflcatalysatoren für heterogene katalysierte Reaktionsabläufe bekannt, welches auf einer parallelisierten Ausprüfung nach evolutionären Methoden basiert.

Entsprechende evolutionär arbeitende Verfahren sind ferner bekannt aus der WO 00 / 43411, J. chem. Inf. Compute. Sci. 2000, 40, 981-987 "Heterogeneous Catalyst Design Using Stochastic Optimization Algorithms" sowie aus Applied Catalysis A: General 200 (2000) 63-77 "An evolutionary approach in the combinatorial selection and optimization of catalytic materials".

Ferner ist aus der US 6,009,379 ein Verfahren zur Steuerung eines Herstellungsprozesses über ein effizientes experimentelles Design bekannt. Dabei werden Versuchs-Punkte gleichmäßig auf einer mehrdimensionalen Kugeloberfläche verteilt, um die einzelnen Herstellungsparameter gleichmäßig zu gewichten.

US 5,253,331 beschreibt ein Verfahren zur Optimierung von Versuchen, wobei Versuchsdaten eingegeben werden. Diese Eingabe wird über ein Expert System eingetragen, wobei das Expert System die Versuchsdaten in SAS-Code sammelt und konvertiert. Das Expert System führt keine automatische Auswertung der Versuchsdaten. Die konvertierten Versuchsdaten werden dem Mathematischen Model (SAS-Software Paket Optimierer) übermittelt, der die Optimierung durchfiihrt. Die Suchstrategie des Optimierers wird dabei nicht beeinflusst. Nach dem Optimierungsschritt untersucht das Expert System die geplanten Versuche nach Fehler, schlägt Alternatiwersuche vor oder bietet eine Bewertung der geplanten Versuche an.

Ein Fachmann, der eine Reihe von Versuchen plant, mit dem Ziel, einen Prozess zu optimieren, würde instinktiv folgendermaßen vorgehen:
- einen ersten Versuch auswählen und durchführen
- die Ergebnisse dieses Versuchs analysieren
- überprüfen, ob das gesetzte Ziel erreicht ist
- wenn ja, dann die Versuchsreihe beenden
- wenn nein, die Parameter für den nächsten Versuch bestimmen,
- und diese Prozedur so lange durchlaufen, bis das gewünschte Ziel erreicht wird.

Diese bekannte Vorgehensweise durch die Offenbarung von WO 00/51045 A unterstützt. WO 00/51045 A offenbart ein Computersystem zur Planung von Versuche mit:
- einem datengetriebenen Black-Box-Optimierer zur Auswahl von zumindest einem ersten Versuch aus einem Versuchsraum und zur Planung der Versuche
- einer Meta-Schicht zur Auswertung der Versuchsergebnisse, wobei die Meta-Schicht den datengetriebenen Black-Box-Optimierer mit dem Ergebnis der Auswertung beeinflusst.

WO 00/51045 A offenbart nicht explizit, dass die Meta-Schicht ein neuronales Netz oder ein Hybridmodell oder ein rigoroses Modell oder Data Mining Methoden enthält. Der Versuchsplanungswerkzeug führt außerdem keine Veränderung des betrachteten Versuchsraums während der Durchführung eines Satzes gerade geplanter Versuche durch.

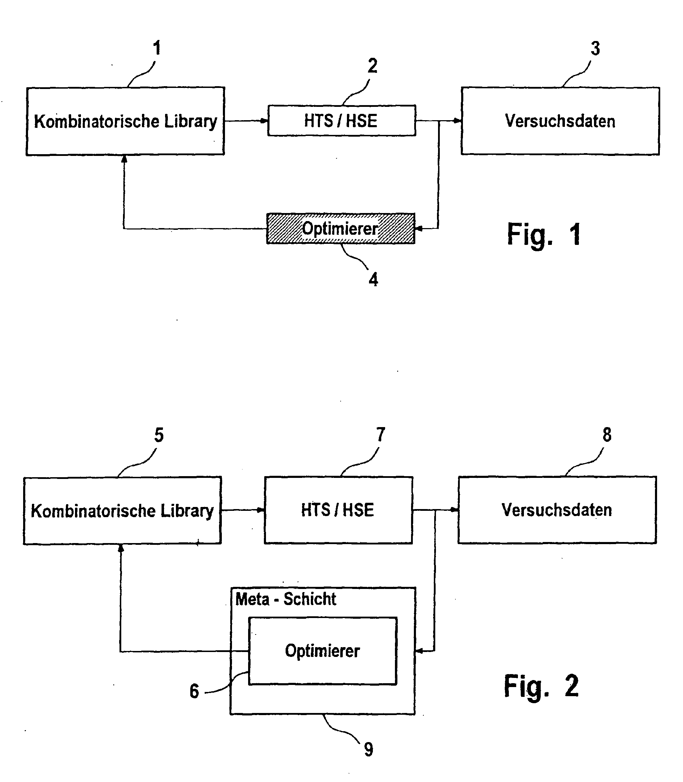

Die Figur 1 zeigt ein Blockdiagramm eines aus dem Stand der Technik bekannten Systems zur Durchführung von Screening Versuchen, wie es insbesondere in den Bereichen Katalyse, Material- und Wirkstoffforschung eingesetzt wird. Das System beinhaltet eine Substanzbibliothek, das heißt eine sogenannte kombinatorische Library 1 und einen Versuchsaufbau 2 zur Durchführung von High-Throughput-Screening (HTS) oder High-Speed Experimentation (HSE) Versuchen. Solche Screening Versuche werden typischerweise für die Wirkstoffidentifizierung, die Katalyseforschung (homogen und heterogen), die Materialsforschung sowie die Identifizierung von optimalen Reaktionsbedingungen bei chemischen, biochemischen oder biotechnologischen Systemen eingesetzt.

Üblicherweise werden in einem solchen Versuchsaufbau 2 mehrere Versuche parallel durchgeführt. Die Versuchsergebnisse werden in Form einer Datei 3 ausgegeben.

Diese Ausgangsdaten oder Teile davon sind zugleich die Eingangsdaten für einen Optimierer 4.

Bei dem Optimierer 4 handelt es sich um einen sogenannten Black-Box-Optimierer, das heißt ein Optimierer, der auf einem datengetriebenen Modell oder auf einem evolutionären Algorithmus basiert. A priori Wissen über Struktur und/oder Wirkungsbeziehungen sind in dem Optimierer 4 nicht vorhanden, vielmehr beschränkt sich dieser auf die Auswertung der Daten als solchen, um eine Auswahl von Versuchen aus der kombinatorischen Library 1 zu treffen.

Typischerweise verwendet der Optimierer 4 die Versuchsdaten 3 bestehend aus Einflussgrößen (Attribute, Faktoren, Strukturmerkmale, Deskriptoren, physikalische Größen, Stoffeigenschaften) und einer Angabe hinsichtlich der Wirkung dieser Größen auf die sogenannten Targets (Zielgrößen), um eine optimale Suchrichtung im Raum der Targets festzulegen.

Die Realisierung eines solchen Black-Box-Optimierers 4 erfolgt beispielsweise über:
- genetische Algorithmen,
- evolutionäre Algorithmen oder Strategien,
- neuronale Netze oder
- sonstige datengetriebene Modellansätze, die auf stochastische oder deterministische oder aus beiden kombinierte Optimierungsstrukturen zurückgreifen.

Ein gemeinsamer Nachteil von solchen aus dem Stand der Technik bekannten Systemen ist, dass a priori Informationen nicht oder nur eingeschränkt in den Black-Box-Optimierer 4 Einfluss finden können und entsprechende Suchstrategien oft langsam oder gegen ungeeignete Suboptima konvergieren. Solche aus dem Stand der Technik bekannte Verfahren sind daher hinsichtlich des Zeit- und Kostenaufwands oft ineffizient. Bei Techniken auf der Basis von evolutionären Algorithmen besteht ferner die Gefahr, dass der Aufwand beim Einsatz des Optimierers zur Erreichung des Optimums höher sein kann als bei einem rationalen oder statistischen Vorgehen.

Der Erfindung liegt daher die Aufgabe zu Grunde ein verbessertes Verfahren zur Planung von Versuchen sowie ein entsprechendes Computersystem und Computerprogrammprodukt zu schaffen.

Die der Erfindung zu Grunde liegende Aufgabe wird mit den Merkmalen der unabhängigen Patentansprüche jeweils gelöst. Bevorzugte Ausführungsformen der Erfindung sind in den abhängigen Patentansprüchen angegeben.

Gegenstand der Erfindung ist ein Verfahren zur Planung von Versuchen zur Erreichung eines Optimierungszieles mit folgenden Schritten:
A) Auswahl von zumindest einem ersten Versuch aus einem Versuchsraum durch einen datengetriebenen Optimierer in einer Rechnereinheit,
B) Eingabe von experimentell ermittelten Versuchsdaten des ersten Versuchs, in mindestens eine Meta-Schicht in eine Rechnereinheit,
C) Verwendung mindestens einer Meta-Schicht für die Auswertung der Versuchsdaten,
D) Eingabe der experimentell ermittelten Versuchsdaten des ersten Versuchs in den datengetriebenen Optimierer,
E) Beeinflussung des datengetriebenen Optimierers durch das Ergebnis der Auswertung in der Meta-Schicht und Prüfung der Zielerreichung,
F) Auswahl von zumindest einem zweiten Versuch aus dem Versuchsraum durch den datengetriebenen Optimierer,
G) Wiederholung der Schritte B) bis E) für die Daten des zweiten Versuchs
   und
H) Abbruch der Hexation bei Zielerreichung oder Wiederholung der Schritte A) bis F) für mindestens einen dritten oder weitere Versuche bis zur Zielerreichung.

Das Verfahren wird wiederholt bis das Optimierungsziel erreicht ist oder festgestellt wird, dass das Optimierungsziel möglicherweise nicht erreicht werden kann. Der Abbruch des Verfahrens kann automatisch oder durch den Benutzer erfolgen. Optimierungsziel können das Erreichen bestimmter Bewertungskennzahlen der Versuche sein. Bei den Kennzahlen kann es sich beispielsweise um Ausbeuten Selektivitäten, Raum-Zeit-Ausbeuten, Kosten, physikalische Eigenschaften, Wirkmechanismen, abgeleitete Eigenschaften usw. handeln. Eine Bewertung der Versuche unter Verwendung mehrerer Kennzahlen ist ebenfalls möglich.

Die Erfindung erlaubt die Integration von Wissen zur Beeinflussung des Black-Box-Optimierers mit dem Ziel der Beschleunigung der Konvergenz und/oder der Sicherstellung der Konvergenz zu einem geeigneten Optimum sowie einer Steigerung der Vertrauenswürdigkeit der Ergebnisse. Das Wissen kann dabei als Vorwissen a priori bekannt sein und/oder laufend durch die Auswertung von zuvor durchgeführten Versuchen ergänzt werden.

Die Generierung von zusätzlichem Wissen erfolgt dabei vorzugsweise in Form von "Regeln", insbesondere über die Struktur-Wirkungsbeziehung mit Data Mining und anderen Verfahren. Diese Regeln können vor, während oder nach einem Optimierungsschritt oder auch fortlaufend in die Versuchsplanung integriert werden, wobei der datengetriebene Optimierer entsprechend beeinflusst wird. Für diese Beeinflussung des datengetriebenen Optimierers ist eine Meta-Schicht vorgesehen.

Durch Einsatz einer solchen Meta-Schicht wird der Black-Box-Optimierer "getuned". Dabei ist die Meta-Schicht nicht auf eine Methode beschränkt, sondern kann die Kombination verschiedener Methoden beinhalten. Mögliche Methoden sind:
- neuronale Netze,
- Hybridmodell,
- rigorose Modelle,
- Data Mining Methoden, wie zum Beispiel Entscheidungsbaumverfahren, allgemeine Separationsverfahren, Untergruppensuchverfahren, allgemeine Partitionsverfahren, Clusterverfahren, Assoziationsregelngeneratoren und Korrelationsverfahren.

Die Beeinflussung der Arbeitsweise des Optimierers kann dabei unmittelbar erfolgen, indem in die Arbeitsweise des Optimierers eingegriffen wird oder mittelbar, indem die Daten, welche die Basis für die Optimierung bilden, gefiltert werden.

Nach einer bevorzugten Ausführungsform der Erfindung werden Methoden zur Beeinflussung des Optimiereres verwendet, durch die der Optimierer und/oder der Optimierungsprozess "getuned" werden. Zu solchen Methoden gehören beispielsweise Untergruppensuchverfahren oder Korrelationsanalysen oder Attributstatistiken bei Regelgeneratoren.

Nach einer weiteren bevorzugten Ausführungsform der Erfindung sind weitere Meta-Layer vorgesehen, die den jeweils vorhergehenden Meta-Layer verbessern oder in den oder die vorhergehenden Meta-Layer und/oder zusätzlich direkt in den Black-Box-Optimierungsprozess der ersten Ebene eingreifen.

Nach einer weiteren bevorzugten Ausführungsform der Erfindung können in jedem Optimierungsschritt die Eingriffspositionen in den ursprünglichen Optimierungsprozess und die in dem oder den Meta-Layem eingesetzten Methoden oder Kombinationen von Methoden variiert werden. Die Auswahl geeigneter Methoden zur Generierung optimaler Regeln kann dabei automatisch erfolgen.

Nach einer bevorzugten Ausführungsform der Erfindung erfolgt die Beeinflussung des Optimierers durch eine Neubewertung der Versuchsdaten. Beispielsweise können die Versuchsdaten selbst bereits eine Auswertung beinhalten, indem entsprechende Daten, wie zum Beispiel die Ausbeute unmittelbar experimentell ermittelt werden. In diesem Fall kann die Neubewertung durch Filterung der Ausbeute-Daten erfolgen, zum Beispiel indem besonders gute Ausbeuten durch die Datenfilterung stärker gewichtet und besonders schlechte Ausbeuten durch die Datenfilterung schwächer gewichtet werden. Durch diese Art der Datenfilterung lässt sich eine schnellere Konvergenz des Versuchsablaufs erreichen.

Entsprechend kann auch vorgegangen werden, wenn die Versuchsdaten nicht unmittelbar eine experimentell ermittelte Bewertung beinhalten, sondern die Bewertung erst durch dem Experiment nachgeordnete Berechnungen ermittelt wird. In diesem Fall werden nicht experimentell ermittelte Daten, sondern durch Berechnung ermittelte Bewertungen gefiltert oder gewichtet.

Die Art und Weise der Filterung ergibt sich dabei durch Regeln oder andere Zusammenhänge, die aufgrund eines Analyseverfahrens der Versuchsdaten, beispielsweise mittels neuronalen Netzen oder Data Mining Verfahren oder anderen Verfahren aufgefunden wurden.

Nach einer weiteren bevorzugten Ausführungsform erfolgt die Beeinflussung des Optimierers durch eine Verkleinerung, Vergrößerung und/oder Verschiebung des Versuchsraums.

Nach einer weiteren bevorzugten Ausführungsform erfolgt die Filterung durch Vorselektion und/oder Gewichtung der Versuchsdaten. Besonders "schlechte" Versuchsdaten, das heißt, solche Versuchsdaten, die von, beispielsweise einem Regelgenerator, als ungeeignet erkannt worden sind, werden vorselektiert und aus dem Versuchsraum eliminiert. Ferner können auch ganze Spalten oder Zeilen aus der Versuchsdatenmatrix eliminiert werden, wenn die entsprechenden Parameter von dem Regelgenerator als nicht relevant erkannt worden sind. Hierdurch wird der Versuchsraum verkleinert, was den Gesamtaufwand erheblich verringert.

Eine Gewichtung der Versuchsdaten kann dadurch erfolgen, dass als besonders relevant erkannte Versuchsdaten in der Versuchsdatenmatrix ein oder mehrfach dupliziert werden. Alternativ kann ein Gewichtungskoeffizient eingeführt werden.

Nach einer weiteren bevorzugten Ausführungsform der Erfindung beinhaltet der Black-Box-Optimierer sogenannte Kemmodule oder Kernoperatoren, sowie ein Modul zur Selektion neuer Versuchspunkte. Die Beeinflussung der Arbeitsweise des Optimierers erfolgt dann durch eine Beeinflussung des oder der Kemmodule und/oder des Moduls zur Selektion neuer Versuchspunkte basierend auf Zusammenhängen, die zum Beispiel von einem Regelgenerator erkannt worden sind.

Im weiteren werden bevorzugte Ausführungsformen der Erfindung mit Bezugnahme auf die Zeichnungen näher erläutert. Es zeigen:
- Figur 1: ein Blockdiagramm zur Darstellung eines aus dem Stand der Technik bekannten Versuchsplanungssystems,
- Figur 2: ein Blockdiagramm einer Ausführungsform eines erfindungsgemäßen Versuchsplanungssystems,
- Figur 3: ein Blockdiagramm einer Ausführungsform des erfindungsgemäßen Versuchsplanungssystems mit einer Neubewertung der Versuchsdaten,
- Figur 4: eine Ausführungsform des erfindungsgemäßen Versuchsplanungs- systems mit einer Vorselektion und/oder Gewichtung der Versuchs- daten,
- Figur 5: eine Ausführungsform des erfindungsgemäßen Versuchsplanungs- systems mit einer Beeinflussung der Selektion neuer Versuchspunkte des Optimierers,
- Figur 6: eine Ausführungsform des erfindungsgemäßen Versuchsplanungs- systems mit einer Beeinflussung des oder der Kemmodule des Optimierers.

Das Versuchsplanungssystem der Figur 2 basiert auf einer kombinatorischen Library, die sich aufgrund der durch einen Versuchsraum 5 gegebenen Rahmenbedingungen ergibt. Aus diesem Versuchsraum 5 werden durch einen Black-Box-Optimierer 6 ein oder mehrere Versuche ausgewählt, die dann in einem Versuchsaufbau 7 beispielsweise mittels eines High-Throughput-Screening oder High-Speed-Experimentation Versuchsverfahren durchgeführt werden. Die entsprechenden Versuchsdaten werden in Form einer Datei 8 ausgegeben.

Für den Black-Box-Optimierer 6 ist in dem Versuchsplanungssystem eine Meta-Schicht 9 vorgesehen. Die Meta-Schicht 9 dient zur Beeinflussung des Black-Box-Optimierers 6 unter Berücksichtigung von a priori bekannten Wissen oder von während der Versuchsdurchführung hinzugewonnenem Wissen. Wissen, zum Beispiel in Form von Regeln oder in Form von trainierten neuronalen Netzen kann dabei fortlaufend durch die Auswertung von Dateien 8 hinzugewonnen werden.

Die Meta-Schicht 9 ergänzt also den datengetriebenen Black-Box-Optimierer 6 durch zusätzliches Wissen, um eine Konvergenz der Versuchsreihe zu beschleunigen. Durch die Meta-Schicht 9 lässt sich also die Konvergenzgeschwindigkeit eines Black-Box Optimierungsverfahrens, welches in dem Black-Box-Optimierer 6 realisiert ist, durch Integration von Vorwissen und/oder Regelstrukturen verbessern.

Diese Integration kann auf verschiedene Arten und Weisen erfolgen, wie zum Beispiel durch:
A Informationsgestützte Zusatzselektion der Testensembles, d.h. Einschränkung der zu prüfenden kombinatorischen Library durch die mit Datamining gefundenen Regeln und kein Eingriff in den Optmierer
B gezielte Gewichtung der Optimierungsschritte in Richtung von als optimal identifizierten Librarybereichen, d. h. Eingriff in das Suchverfahren des Optimierers
C Tuning der Selektionsregeln der Black-Box-Optimierungsverfahren, d. h. direkter Eingriff in das Bewertungsverfahrens des Optimierers oder Modifikation der Bewertungsgrößen vor Eingang in den Optimierer

Die Eingriffsformen A, B und C können grundsätzlich auch in Kombination erfolgen, d.h. es können bei einem Optimierungsschritt auch Eingriffe bei A und B, B und C, A und C oder A und B und C erfolgen. Von Optimierungschritt zu Optimierungschritt können sich die Eingriffspositionen und Eingriffskombinationen sowie die im Metalayer verwendeten Methoden ändern. Die Eingriffe können auch aus nachgeordneten Metalayers erfolgen.

Bei der Optimierung durch statistische Versuchsplanung ist das Vorgehen ähnlich zu der Verwendung eines Black-Box-Optimierers, das heißt auch hier wird in dem Optimierungsprozess über die Meta-Schicht in einer oder mehreren der oben beschriebenen Formen eingegriffen. Zum Beispiel erfolgt die Integration von Vorwissen, indem bei der Wahl der Einflussgrößen deren Gültigkeitsbereich und/oder zusätzliche Beschränkungen des Gültigkeitsbereichs bei der Kombination von Einflussgrößen einfließen.

Für die sequentielle statistische Versuchsplanung können durch den Einsatz von Data Mining Methoden oder anderen oben beschriebenen Methoden weitere Informationen über Einflussgrößen einfließen und in die Versuchsplanung integriert werden, das heißt nach dem ersten, zweiten ..., n-ten Durchlauf wird jeweils aufgrund der zusätzlichen Informationen der Versuchsraum verändert.

Die Veränderung erfolgt durch
a) Hinzunahme oder Entfernung von Einflussgrößen
b) Veränderung der Gültigkeitsbereiche der einzelnen oder kombinierten Einflussgrößen
c) Kombination aus a) und b).

Von besonderem Vorteil ist dabei, dass "klassische" aus dem Stand der Technik an sich bekannte Versuchsplanungsverfahren für einen Black-Box - oder einen statistischen Optimierer 6 weiter benutzt werden können; diese Versuchsplanungsverfahren werden durch die vorliegende Erfindung verbessert, indem durch die Berücksichtigung von Vorwissen oder während des Versuchsablaufs hinzu gewonnenem Wissen das Verfahren schneller oder überhaupt kontergiert.

Insbesondere wird die Konvergenzgeschwindigkeit durch das erfindungsgemäße "Tuning" beim Optimieren der Versuchsplanung für Katalysatoren, Wirkstoffe oder Materialien oder Reaktionsbedingungen deutlich erhöht. Ein weiterer Vorteil ist, dass sich die Anzahl der Versuche bei gleicher Ergebniserwartung reduzieren lässt, womit ein geringerer Material- und Zeitaufwand und eine bessere Ausnutzung der Anlagen erzielbar ist.

Von besonderem Vorteil ist ferner, dass durch die Integration des Vorwissens kein Verlust von Forschungsinvestitionen beim Einsatz von HSE- oder HTS-Technologien oder bei einem kombinatorischen Vorgehen gegeben ist.

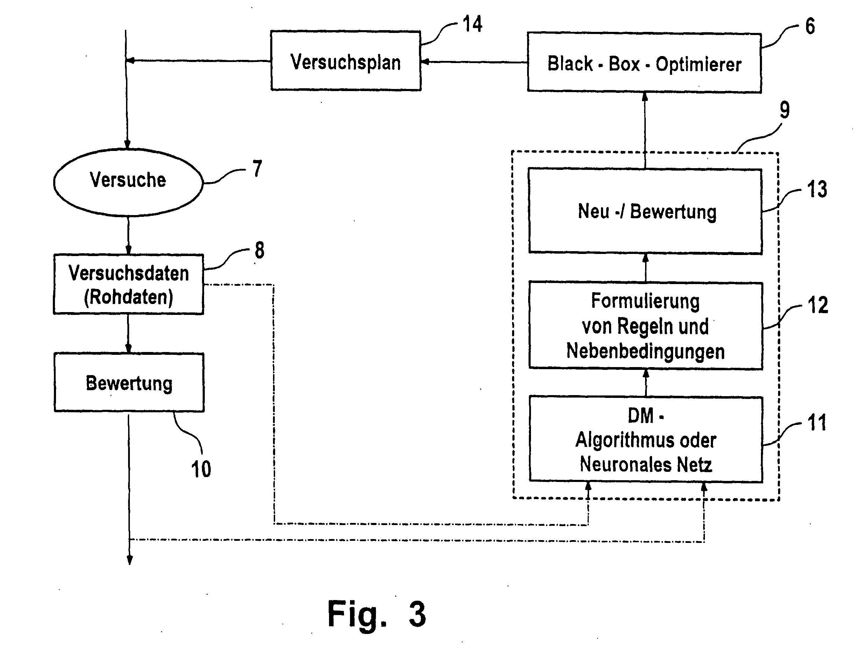

Die Figur 3 zeigt eine Ausführungsform des Versuchsplanungssystems, bei der eine Neubewertung der Versuche erfolgt.

In dem Versuchsaufbau 7 werden ein oder mehrere zuvor aus dem Versuchsraum 5 (vgl. Figur 2) ausgewählte Versuche durchgeführt. Die entsprechenden Versuchsdaten werden in Form der Datei 8 ausgegeben. Die Versuchsdaten können dabei selbst bereits eine Bewertung beinhalten, wenn entsprechende Daten unmittelbar experimentell erfasst werden können. Ein Beispiel hierfür ist die experimentelle Bestimmung der Ausbeute. Die Ausbeute ist gleichzeitig eine Bewertung der durchgeführten Versuche.

In anderen Fällen kann es erforderlich sein, zusätzlich eine Bewertung der Versuchsdaten in einem Bewertungsmodul 10 vorzunehmen. Beispielsweise beinhaltet das Bewertungsmodul 10 eine Berechnungsvorschrift für die Berechnung einer Bewertung basierend auf einen oder mehreren der Versuchsdaten.

Die Datei 8 und gegebenenfalls das Ergebnis des Bewertungsmoduls 10 werden in die Meta-Schicht 9 eingegeben. Die Meta-Schicht 9 beinhaltet ein Modul 11 zur Realisierung eines Data Mining (DM) Algorithmus, eines neuronalen Netzes oder eine Hybridverfahrens oder eines anderen geeigneten Datenanalyseverfahrens.

Durch die Anwendung eines solchen Verfahrens werden Regeln generiert, das heißt zusätzliche Informationen und Erkenntnisse zum Verständnis des in den Versuchen betrachteten chemischen Systems. Das Modul 11 hat also die Funktion eines Regelgenerators. Entsprechende Regeln und Nebenbedingungen werden in dem Modul 12 der Meta-Schicht 9 formuliert.

Basierend auf diesen Regeln und Nebenbedingungen erfolgt dann gegebenenfalls in dem Modul 13 eine Neubewertung des oder der Versuche. Dies kann so erfolgen, dass ein Neuberwertung eines Versuchs nur dann vorgenommen wird, sofern ein vorgegebener Schwellwert überschritten wird. Alternativ kann auch der Benutzer eingreifen, um die Neubewertung zu aktivieren oder zu deaktivieren. Die Neubewertung kann darin bestehen, dass als "schlecht" erkannte Versuche eine verschlechterte Bewertung erhalten und als "gut" erkannte Versuche eine verbesserte Bewertung.

Basierend auf der Datei 8, die gegebenenfalls neu bewertete Versuchsdaten beinhaltet, erstellt dann der Black-Box-Optimierer 6 einen weiteren Versuchsplan 18. Die entsprechenden Versuche werden dann wiederum in dem Versuchsaufbau durchgeführt und so weiter.

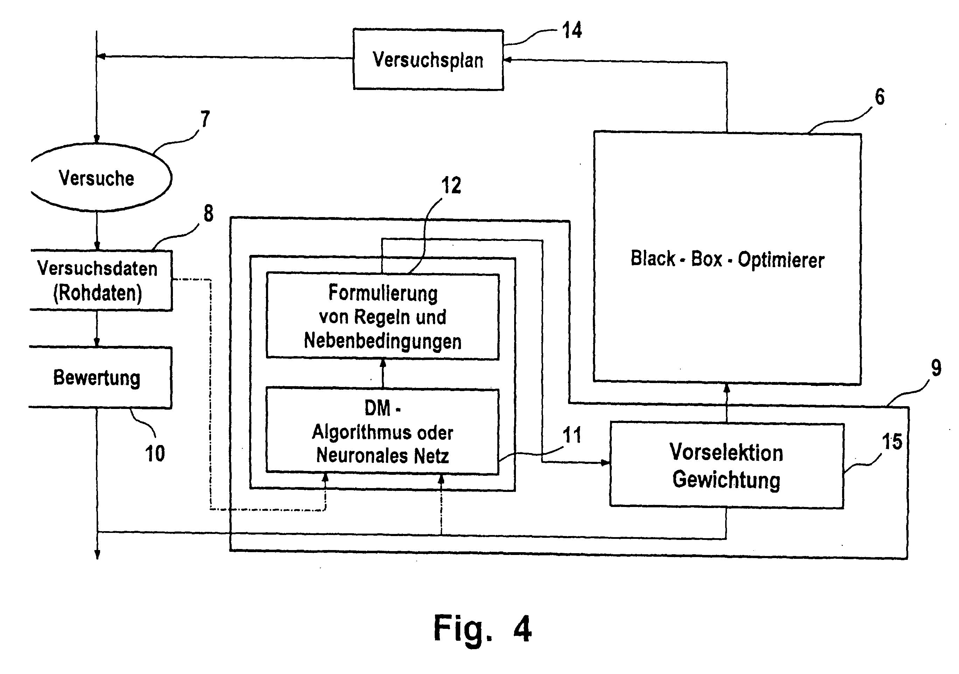

Die Figur 4 zeigt eine alternative Ausführungsform, bei der die Filterung nicht durch eine Neubewertung der Versuchsdaten, sondern durch eine Vorselektion und/oder Gewichtung erfolgt. Das Versuchsplanungssystem der Figur 4 ist dabei prinzipiell gleich aufgebaut, wie das der Figur 3, wobei an Stelle des Moduls 13 ein Modul 15 für die Vorselektion und/oder Gewichtung verwendet wird.

Die Versuchsdaten werden also nicht neu oder anders bewertet, sondern es können mittels des Moduls 15 auf der Grundlage der ermittelten Regeln beispielsweise Versuche ausgeblendet oder stärker oder schwächer gewichtet werden. Dadurch findet eine Vorselektion statt, ohne dass die Bewertung der Versuche selbst geändert wird.

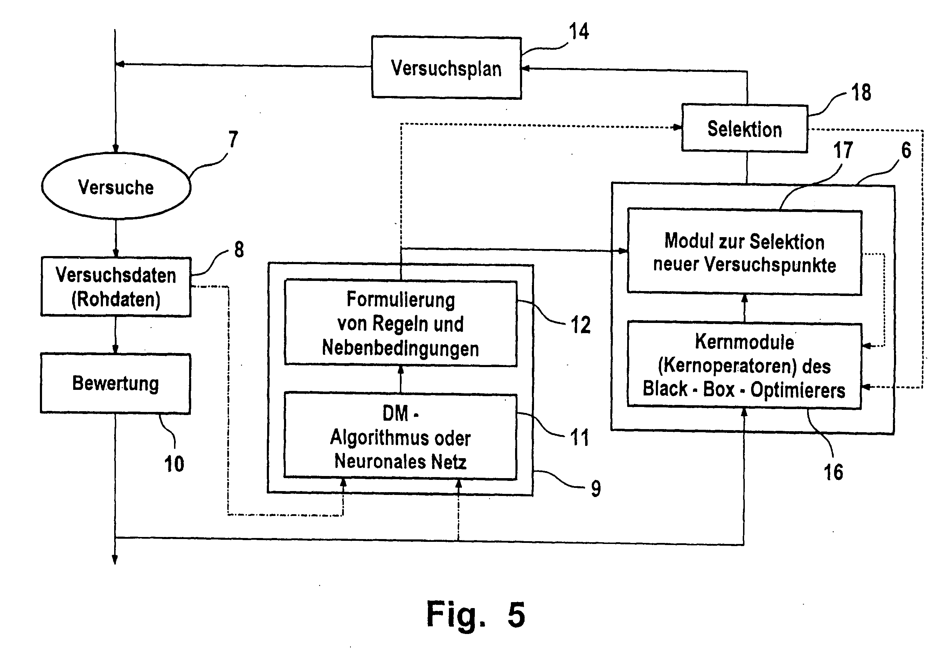

Die Figur 5 zeigt eine weitere Ausführungsform des erfindungsgemäßen Versuchsplanungssystems. Die Ausführungsform der Figur 5 unterscheidet sich von den Ausführungsformen der Figur 3 und der Figur 4 dadurch, dass unmittelbar in den Black-Box-Optimierer 6 eingegriffen wird.

Der Black-Box-Optimierer 6 beinhaltet in dieser Ausführungsform ein oder mehrere Kernmodule 16, das heißt sogenannte Kemoperatoren. Ferner beinhaltet der Black-Box-Optimierer 6 ein Modul 17 zur Selektion neuer Versuchspunkte. Die Arbeitsweise des Moduls 17 wird durch die von dem Modul 12 formulierten Regeln und Nebenbedingungen beeinflusst, das heißt es werden beispielsweise von dem Modul 17 selektierte neue Versuchspunkte verworfen, so dass eine Rückkopplung von dem Modul 17 zu dem Kemmodul 16 erfolgt, um entsprechende weitere Versuchspunkte als Ersatz für die verworfenen Versuchspunkte zu selektieren.

Nach Ablauf der eigentlichen Optimierung in dem oder den Kernmodulen 16, werden also durch das Modul 17 neue Versuche bzw. Versuchspunkte zur Optimierung der Zielgrößen des betrachteten Systems vorgeschlagen. Bei diesem System kann es sich beispielsweise um ein chemisches, biotechnologisches, biologisches, enzymatisches System handeln.

Auf der Grundlage der über den Regelgenerator, das heißt die Meta-Schicht 9 erarbeiteten Regeln werden Versuche, die den generierten Regeln widersprechen, aussortiert und gegebenenfalls durch neue Versuche über den Black-Box-Optimierer 6, das heißt, das oder die Kernmodule 16, ergänzt.

Das Aussortieren kann dabei streng, das heißt vollständig, oder weich, mit einer gewissen Gewichtung erfolgen. Auch die neu geplanten Versuche müssen dann wiederum durch das Modul 17. Auf diese Weise wird erreicht, dass Informationen, die von dem oder den Kernmodulen 16 nicht berücksichtigt werden oder berücksichtigt werden können, nachträglich in die Versuchsplanung einfließen.

Alternativ kann ein separates Modul 18 dem Black-Box-Optimierer 6 nachgeschaltet sein, um die Nachselektion der von dem Modul 17 selektierten neuen Versuchspunkte vorzunehmen. Dies entspricht einem Test in dem Modul 18, ob die neuen Versuchspunkte, die von dem Modul 17 vorgeschlagen worden sind, regelkonform sind. Wenn bei diesem Test Versuchspunkte eliminiert werden, ist wiederum ein Rückfluss erforderlich, um entsprechende alternative neue Versuchspunkte zu planen.

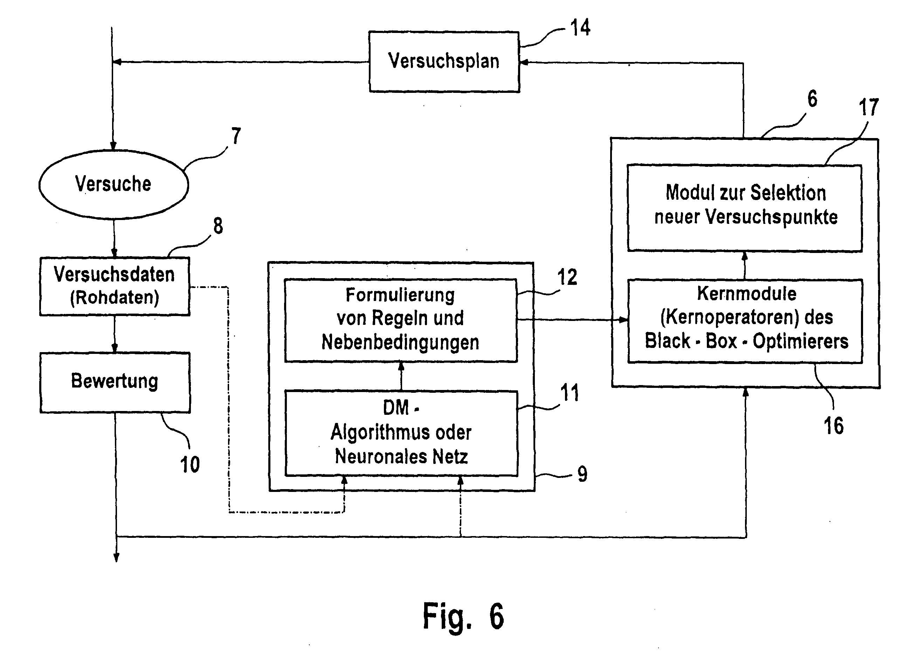

Die Ausführungsform des Versuchsplanungssystems der Figur 6 entspricht dem Versuchsplanungssystem der Figur 5 mit dem Unterschied, dass nicht die Arbeitsweise des Moduls 17 beeinflusst wird oder eine Nachselektion in dem Modul 18 stattfindet, sondern dass unmittelbar die Arbeitsweise des oder der Kernmodule 16 des Black-Box-Optimierers 6 beeinflusst wird.

Beispiele für Kernoperatoren von neuronalen Netzen sind die Art und Anzahl von Einflussgrößen sowie die Gewichtung einzelner Datenpunkte.

Beispiele für Kernoperatoren von evolutionären Algorithmen am Beispiel des genetischen Algorithmus sind der Selektionsoperator (Auswahl einer neuen Reihe von Versuchen), der Mutationsoperator und der Cross-Over Operator.

Die Regeln und Informationen, die durch den Regelgenerator erzeugt werden, werden in dem Algorithmus des Optimierers selbst bei der Ausführung berücksichtigt.

Für Optimierer, die mit Neuronalen Netzen gekoppelt sind, bedeutet dies, dass durch die Regeln der Versuchsraum eingeschränkt oder die Datensätze in besonderer Weise gewichtet werden.

Bei evolutionärer Algorithmus-Optimierern werden die zusätzlichen Informationen in einem oder mehreren Kernoperatoren berücksichtigt. Dies bedeutet, dass z.B. bestimmte Kreuzungen, Selektionen oder Mutationen verboten oder bevorzugt durchgeführt werden.

Für beide Optimierertypen hat dies zur Folge, dass bei einer vollständigen Automatisierung des Workflows über Schnittstellen in die entsprechenden Programmteile des Optimierers eingegriffen wird oder die Informationen über manuelle oder programmgesteuerte Änderungen von Optimierungsparametern in den Optimierer einfließen.

Die Ausführungsformen der Figuren 3 bis 6 können miteinander kombiniert werden, das heißt es können mehrere Regelgeneratoren, das heißt Meta-Schichten 9 unabhängig voneinander in den Optimierungsablauf eingebunden sein. Diese Regeln können mit verschiedenen, unabhängig voneinander eingesetzten Verfahren und Methoden erzeugt und in dem Modul 12 zusammengeführt werden.

Die Berücksichtigung der Regeln, die von dem oder den Regelgeneratoren der Meta-Schichten 9 formuliert worden sind, erfolgt entweder automatisch über definierte Schnittstellen und unter Einhaltung vorgegebener Schwellwerte oder durch manuelle Formulierung von Regeln für den Bereich des Optimierers, in den der Regelgenerator eingreift.

### Bezugszeichenliste

- kombinatorische Library: 1
- Versuchsaufbau: 2
- Datei: 3
- Optimierer: 4
- Versuchsraum: 5
- Black-Box-Optimierer: 6
- Versuchsaufbau: 7
- Datei: 8
- Meta-Schicht: 9
- Bewertungsmodul: 10
- Modul: 11
- Modul: 12
- Modul: 13
- Versuchsplan: 14
- Modul: 15
- Kemmodul: 16
- Modul: 17
- Modul: 18

## Patentansprüche

1. Verfahren zur Planung von Versuchen zur Erreichung eines Optimierungszieles mit folgenden Schritten:
A) Auswahl von zumindest einem ersten Versuch aus einem Versuchsraum (5) durch einen datengetriebenen Black-Box-Optimierer (6) in einer Rechnereinheit,
B) Eingabe von experimentell ermittelten Versuchsdaten des ersten Versuchs, in mindestens eine Meta-Schicht (9) in eine Rechnereinheit,
C) Verwendung der mindestens einen Meta-Schicht (9) für die Auswertung der experimentell ermittelten Versuchsdaten unter Verwendung von a priori bekanntem Wissen und mittels einer oder mehrerer Methoden aus der Reihe neuronale Netze, Hybridmodelle, rigorose Modelle, Data Mining oder eine Kombination der genannten Methoden.
D) Eingabe der experimentell ermittelten Versuchsdaten des ersten Versuchs in den datengetriebenen Black-Box-Optimierer (6),
E) Beeinflussung des datengetriebenen Black-Box-Optimierers (6) durch das Ergebnis der Auswertung in der Meta-Schicht (9) und Prüfung der Zielerreichung, wobei der Versuchsraum (5) durch den Black-Box-Optimierer (6) und/oder durch die Meta-Schicht (9) verändert wird,
F) Auswahl von zumindest einem zweiten Versuch aus dem Versuchsraum (5) durch den datengetriebenen Black-Box-Optimierer (6),
G) Wiederholung der Schritte B) bis E) für die Versuchsdaten des zweiten Versuchs und
H) Abbruch des Verfahrens bei Zielerreichung oder Wiederholung der Schritte A) bis E) für mindestens einen dritten oder weitere Versuche bis zur Zielerreichung.

2. Verfahren nach Anspruch 1, wobei der Versuchsraum (5) vor der Auswahl von dem zumindest einem zweiten Versuch durch den Black-Box-Optimierer (6) und/oder durch die Meta-Schicht (9) beschränkt, verschoben oder vergrößert wird.

3. Verfahren nach Anspruch 1 oder 2, wobei zur Ermittlung der experimentellen Versuchsdaten Versuche aus dem Bereich der Wirkstoffforschung, Materialforschung, Katalyseforschung, Biotechnologie und/oder Optimierung von Reaktionsbedingungen durchgeführt werden.

4. Verfahren nach einem der vorhergehenden Ansprüche 1 bis 3, wobei die Beeinflussung des datengetriebenen Black-Box-Optimierers (6) durch Filterung der Versuchsdaten basierend auf der Auswertung erfolgt.

5. Verfahren nach Anspruch 4, wobei die Filterung durch eine Neubewertung der Versuchsdaten erfolgt.

6. Verfahren nach Anspruch 4, wobei die Filterung durch Gewichtung und/oder Vorselektion der Versuchsdaten erfolgt.

7. Verfahren nach Anspruch 6, wobei die Gewichtung durch einen Gewichtungsparameter oder durch ein- oder mehrfache Duplizierung der Versuchsdaten erfolgt.

8. Verfahren nach einem der vorhergehenden Ansprüche 1 bis 7, wobei der Black-Box-Optimierer (6) mindestens ein Kernmodul und ein Modul zur Selektion neuer Versuchspunkte aufweist.

9. Verfahren nach Anspruch 8, wobei die Beeinflussung des datengetriebenen Black-Box-Optimierers (6) durch Beeinflussung des Moduls zur Selektion neuer Versuchspunkte erfolgt.

10. Verfahren nach Anspruch 9, wobei die Beeinflussung des Moduls zur Selektion neuer Versuchspunkte bei Überschreiten eines Schwellwerts und/oder durch Benutzervorgaben erfolgt.

11. Verfahren nach Anspruch 10, wobei die Beeinflussung des datengetriebenen Black-Box-Optimierers (6) durch Beeinflussung des Kernmoduls erfolgt.

12. Verfahren nach Anspruch 11, wobei die Beeinflussung des Kernmoduls bei Überschreiten eines Schwellwerts und/oder durch Benutzervorgaben erfolgt.

13. Computerprogrammprodukt mit Programmcode-Mitteln, die auf einem computer-lesbaren Datenträger gespeichert sind, um das Verfahren nach einem der Ansprüche 1 bis 12 durchzuführen, wenn das Computerprogrammprodukt auf einem Computer ausgeführt wird.

14. Computersystem zur Planung von Versuchen mit:
A. einem datengetriebenen Black-Box-Optimierer (6) zur Auswahl von zumindest einem ersten Versuch aus einem Versuchsraum (5) und zur Planung der Versuche,
B. einer Meta-Schicht (9) für die Auswertung von Versuchen unter Verwendung experimentell ermittelter Versuchsdaten unter Verwendung von a priori bekanntem Wissen, wobei die Meta-Schicht (9) ein neuronales Netz und/oder ein Hybridmodell und/oder ein rigoroses Modell und/oder Data Mining Methoden beinhaltet, und wobei die Meta-Schicht (9) den datengetriebenen Black-Box-Optimierer (6) mit dem Ergebnis der Auswertung derart beeinflusst, dass der Versuchsraum (5) vor der Auswahl des weiteren Versuchs verändert wird, insbesondere beschränkt, verschoben oder vergrößert wird.

15. Computersystem nach Anspruch 14, mit Mitteln zur Filterung der Versuchsdaten basierend auf der Auswertung der Meta-Schicht (9).

16. Computersystem nach Anspruch 15, wobei die Mittel zur Filterung zur Neubewertung der Versuchsdaten ausgebildet sind.

17. Computersystem nach Anspruch 15, wobei die Mittel zur Filterung zur Gewichtung und/oder Vorselektion der Versuchsdaten ausgebildet sind.

18. Computersystem nach einem der vorhergehenden Ansprüche 14 bis 17, wobei der Black-Box-Optimierer (6) zumindest ein Kernmodul und ein Modul zur Selektion neuer Versuchspunkte aufweist.

19. Computersystem nach Anspruch 18, wobei die Meta-Schicht (9) zur Beeinflussung des Moduls zur Selektion neuer Versuchspunkte ausgebildet ist.

20. Computersystem nach Anspruch 18, wobei die Meta-Schicht (9) zur Beeinflussung der Kernmodule ausgebildet ist.

## Claims

1. Method for designing experiments for achieving an optimization goal having the following steps:
A) selection of at least a first experiment from an experimental space (5) by means of a data-driven black-box optimizer (6) in a computer unit,
B) inputting of experimentally determined experiment data of the first experiment in at least one meta layer (9) into a computer unit,
C) use of the at least one meta layer (9) for the evaluation of the experimentally determined experiment data, using knowledge which is known a priori, and by means of one or more methods from the series of neural networks, hybrid models, rigorous models, data mining or a combination of the specified methods.
D) inputting of the experimentally determined experiment data of the first experiment into the data-driven black-box optimizer (6),
E) influencing of the data-driven black-box optimizer (6) by the result of the evaluation in the meta layer (9) and checking the goal achieved, wherein the experiment space (5) is changed by the black-box optimizer (6) and/or by the meta layer (9),
F) selection of at least a second experiment from the experimental space (5) by means of the data-driven black-box optimizer (6),
G) repetition of steps B) to E) for the experiment data of the second experiment,
and
H) stopping the method on achieving the goal or repeating steps A) to E) for at least a third or subsequent experiments until the goal has been achieved.

2. Method according to Claim 1, the experimental space (5) being restricted, displaced or enlarged by means of the black-box optimizer (6) and/or the meta layer (9) before the selection of the at least one second experiment.

3. Method according to Claim 1 or 2, experiments from the field of active ingredient research, materials research, catalysis research, biotechnology and/or optimization of reaction conditions being carried out in order to determine the experimental data.

4. Method according to one of the preceding Claims 1 to 3, the influencing of the data-driven black-box optimizer (6) being carried out by filtering the experiment data on the basis of the evaluation.

5. Method according to Claim 4, the filtering being carried out by means of a re-evaluation of the experiment data.

6. Method according to Claim 4, the filtering being carried out by means of weighting and/or preselection of the experiment data.

7. Method according to Claim 6, the weighting being carried out by means of a weighting parameter or by means of single or multiple duplication of the experiment data.

8. Method according to one of the preceding Claims 1 to 7, the black-box optimizer (6) having at least one core module and one module for selecting new test points.

9. Method according to Claim 8, the data-driven black-box optimizer (6) being influenced by influencing the module for the selection of new test points.

10. Method according to Claim 9, the module for selecting new test points being influenced when a threshold value is exceeded and/or by means of values predefined by a user.

11. Method according to Claim 10, the data-driven black-box optimizer (6) being influenced by influencing the core module.

12. Method according to Claim 11, the core module being influenced when a threshold value is exceeded and/or by means of values predefined by a user.

13. Computer program product having program code means which are stored on a computer-readable data carrier in order to carry out the method according to one of Claims 1 to 12 when the computer program product is executed on a computer.

14. Computer system for designing experiments having:
A. a data-driven black-box optimizer (6) for selecting at least one first experiment from an experimental space (5) and for designing the experiments,
B. a meta layer (9) for the evaluation of experiments using experimentally determined data using knowledge which is known a priori, wherein the meta layer (9) includes a neural network and/or a hybrid model and/or a rigorous model and/or data mining methods, and wherein the meta layer (9) influences the data-driven black-box optimizer (6) with the result of the evaluation in such a way that the experiment space (5) is changed, in particular restricted, displaced or enlarged, before the selection of the further experiment.

15. Computer system according to Claim 14, having means for filtering the experiment data on the basis of the evaluation of the meta layer (9).

16. Computer system according to Claim 15, the filtering means being designed to re-evaluate the experiment data.

17. Computer system according to Claim 15, the filtering means being designed to weight and/or preselect the experiment data.

18. Computer system according to one of the preceding Claims 14 to 17, the black-box optimizer (6) having at least one core module and one module for selecting new test points.

19. Computer system according to Claim 18, the meta layer (9) being designed to influence the module for selecting new test points.

20. Computer system according to Claim 18, the meta layer (9) being designed to influence the core modules.

## Revendications

1. Procédé pour planifier des essais en vue d'atteindre un objectif d'optimisation avec les étapes suivantes :
A) Choix d'au moins un premier essai d'un domaine d'essai (5) par une boîte noire d'optimiseur numérique (6) dans une unité de calcul,
B) Saisie de données d'essais du premier essai déterminées expérimentalement dans au moins une métacouche (9) dans une unité de calcul,
C) Utilisation d'au moins une métacouche (9) pour le traitement des données d'essais déterminées expérimentalement en utilisant des connaissances à priori et au moyen d'une ou de plusieurs méthodes de la série des réseaux neuronaux, des modèles hybrides, des modèles rigoureux, de l'exploration des données ou d'une combinaison des méthodes mentionnées,
D) Saisie des données d'essais du premier essai déterminées expérimentalement dans les boîtes noires d'optimiseurs numériques (6),
E) Influence sur la boîte noire d'optimiseur numérique (6) par le résultat du traitement dans la métacouche (9) et vérification de l'atteinte de l'objectif, le domaine d'essai (5) étant modifié par la boîte noire d'optimiseur (6) et/ou par la métacouche (9),
F) Choix d'au moins un deuxième essai du domaine d'essai (5) par la boîte noire d'optimiseur numérique (6),
G) Réitération des étapes B) à E) pour les données d'essais du deuxième essai,
et
H) Arrêt du procédé par l'atteinte de l'objectif ou réitération des étapes A) à E) pour au moins un troisième essai ou d'autres essais jusqu'à l'atteinte de l'objectif.

2. Procédé selon la revendication 1, dans lequel le domaine d'essai (5) est limité, déplacé ou agrandi par la boîte noire d'optimiseur (6) et/ou par la métacouche (9) avant le choix du deuxième essai au moins.

3. Procédé selon la revendication 1 ou 2, dans lequel on réalise des essais dans le domaine de la recherche de substances actives, de la recherche en matériaux, de la recherche en catalyse, de la biotechnologie et/ou de l'optimisation des conditions de réaction pour déterminer les données d'essais expérimentales.

4. Procédé selon une des revendications précédentes 1 à 3, dans lequel l'influence sur la boîte noire d'optimiseur numérique (6) résulte du filtrage des données d'essais expérimentales basé sur le traitement.

5. Procédé selon la revendication 4, dans lequel le filtrage résulte d'une réévaluation des données d'essais.

6. Procédé selon la revendication 4, dans lequel le filtrage résulte de la pondération et/ou de la présélection des données d'essais.

7. Procédé selon la revendication 6, dans lequel la pondération résulte d'un paramètre de pondération ou d'une ou de plusieurs duplications des données d'essais.

8. Procédé selon une des revendications précédentes 1 à 7, dans lequel la boîte noire d'optimiseur (6) comporte au moins un module du noyau et un module pour la sélection de nouveaux points d'essais.

9. Procédé selon la revendication 8, dans lequel l'influence sur la boîte noire d'optimiseur numérique (6) résulte de l'influence sur le module pour la sélection de nouveaux points d'essais.

10. Procédé selon la revendication 9, dans lequel l'influence sur le module pour la sélection de nouveaux points d'essais résulte du franchissement d'une valeur de seuil et/ou des consignes de l'utilisateur.

11. Procédé selon la revendication 10, dans lequel l'influence sur la boîte noire d'optimiseur numérique (6) résulte de l'influence sur le module du noyau.

12. Procédé selon la revendication 11, dans lequel l'influence sur le module du noyau résulte du franchissement d'une valeur de seuil et/ou des consignes de l'utilisateur.

13. Produit logiciel avec des moyens de codes programmés stockés sur un support de données pouvant être lu par ordinateur, pour exécuter le procédé selon une des revendications 1 à 12, lorsque le produit logiciel est exécuté sur un ordinateur.

14. Système informatique pour planifier des essais avec :
A) une boîte noire d'optimiseur numérique (6) pour choisir au moins un premier essai d'un domaine d'essai (5) et pour planifier les essais,
B) une métacouche (9) pour le traitement d'essais en utilisant des données d'essais déterminées expérimentalement, en utilisant des connaissances à priori, la métacouche (9) contenant un réseau neuronal et/ou un modèle hybride et/ou un modèle rigoureux et/ou des méthodes d'exploration des données, et où la métacouche (9) influence la boîte noire d'optimiseur numérique (6) avec le résultat du traitement de telle sorte que le domaine d'essai (5) est modifié, notamment limité, déplacé ou agrandi avant le choix de l'essai suivant.

15. Système informatique selon la revendication 14, avec des moyens de filtrage des données d'essais basés sur le traitement de la métacouche (9).

16. Système informatique selon la revendication 15, dans lequel les moyens de filtrage sont développés pour la réévaluation des données d'essais.

17. Système informatique selon la revendication 15, dans lequel les moyens de filtrage sont développés pour la pondération et/ou pour la présélection des données d'essais.

18. Système informatique selon une des revendications précédentes 14 à 17, dans lequel la boîte noire d'optimiseur (6) comporte au moins un module du noyau et un module pour la sélection de nouveaux points d'essais.

19. Système informatique selon la revendication 18, dans lequel la métacouche (9) est développée pour influencer le module pour la sélection de nouveaux points d'essais.

20. Système informatique selon la revendication 18, dans lequel la métacouche (9) est développée pour influencer les modules du noyau.
